# EUROPEAN PATENT SPECIFICATION

(11) **EP 2 912 976 B1**
(45) Date of publication and mention of the grant of the patent: **23.08.2017**
(21) Application number: 14157088.7
(22) Date of filing: 27.02.2014
(51) Int. Cl.: A47J 36/38, A47J 37/06, A47J 37/07

(54) **Barbecue appliance**
Grillgerät
Appareil de barbecue

(43) Date of publication of application: 02.09.2015
(73) Proprietor: Electrolux Appliances Aktiebolag, 105 45 Stockholm (SE)
(72) Inventor: Cenedese, Claudio, 33080 Porcia (PN) (IT); Tuzzi, Omero, 33080 Porcia (PN) (IT); Raus, Dragan, 33080 Porcia (PN) (IT); Dorigo, Roberto, 33080 Porcia (PN) (IT)
(74) Representative: Electrolux Group Patents

(56) References cited:
- US-A- 4 034 663
- US-A1- 2010 282 239
- US-A1- 2011 180 527

## Description

The present invention relates to the field of cooking appliances. In particular, the present invention relates to barbecue appliances and, more specifically, to barbecue appliances equipped with a hood.

In a barbecue appliance, food to be cooked is positioned onto a cooking surface where it is heated/cooked by hot gases, thermal irradiation of heating elements (e.g. coal, gas flame, electric heater) as well as by heat conduction by the cooking surface itself.

In order to accelerate the cooking process the barbecue appliance may be equipped with a hood.

The cooking process is characterized by smoke and odour emissions in surrounding ambient. These emissions are increasingly important in powerful barbecue appliances, such as gas fuel barbecue appliances.

The hood, when present, enables to control the air inlet, the smoke outlet and the smoke circulation within the cooking cavity.

However, the smoke and odour emissions are undesired both in outdoor and indoor applications because they are unpleasant to olfactory sense, polluting and not suitable for discharge freely into open air.

It is known in the art to use a catalytic conversion process in order to catalytically oxidizing grease, fats, oils and/or other hydrocarbons in an air stream emanating from a cooking grill.

US 2011/0180527 discloses an electric grill comprising a lower grill housing; a grate supported on the lower grill housing; a hood positionable over the lower grill housing to provide an enclosed grill cavity; a smoke exhaust system; and an odour-removal device that is cooperatively associated with the exhaust system for removing odours and contaminants from the grill smoke before the smoke is vented to the environment. In one embodiment, the odour-removal device includes a catalyst material and a layered heater. The catalyst material treats the smoke emissions by means of catalytic conversion by breaking down complex organic molecules and reduces odours. The layered heater heats the catalyst material to a temperature sufficient to support a catalytic reaction.

US2010/0282239A1 discloses a cooking appliance having a cooking surface, a housing enclosing a heating source for heating the cooking surface disposed beneath the cooking surface, and a vertically movable cooking fume hood connected with the housing and comprising a vertically movable wall or door. The hood has on top a cooking fume exhaust opening where a catalyst suitable for incinerating the particulate emissions in the cooking fumes is disposed.

The Applicant observes that catalytic conversion takes place above a predetermined activation temperature of the catalyst material. Moreover, catalytic conversion efficiency is sensible to temperature variations. The Applicant further observes that the temperature required to support a catalytic reaction can be provided, at least in part, by the heat released from hot gases (combustion smoke and food cooking smoke/odours) passing through the catalytic filter from the grill cavity. However, in a barbecue appliance with hood, frequent hood openings are required in order to control and handle the cooking process. Such hood openings cause sudden temperature drops (that my amount to 30 - 40 °C) within the grill cavity whereby at each hood opening the catalyst material operates at a lower temperature, performing lower conversion efficiency.

It is an object of the invention to provide an alternative barbecue appliance with a hood and a catalytic filter assembly.

It is a further object of the invention to provide a barbecue appliance with a hood and a catalytic filter assembly with enhanced performances.

It is a further object of the invention to provide a barbecue appliance with a hood and a catalytic filter assembly that has improved catalytic conversion efficiency.

It is another object of the invention to provide a barbecue appliance with a hood and a catalytic filter assembly that has improved design and construction.

The Applicant found that the above objects are achieved by a barbecue appliance comprising a lower housing; a cooking surface located in the lower housing; a hood positionable over the lower housing to define a cooking cavity; and a catalytic filter assembly, wherein the hood comprises a fixed part and a movable part. The movable part is configured to be opened and closed. The catalytic filter assembly is positioned in the fixed part of the hood.

The provision of a hood made of a fixed part and a movable part and the positioning of the catalytic filter assembly into the fixed part of the hood enables the temperature drops caused by hood openings to be substantially confined to the area of the cooking cavity which is defined by the movable part of the hood, so that the temperature within the area of the cooking cavity which is defined by the fixed part of the hood is maintained more stable. In this way, variations of the working temperature of the catalytic filter assembly are limited and the catalytic conversion efficiency is improved. Moreover, the working temperature of the catalytic filter assembly is prevented from falling below the activation temperature of the catalyst material so that obstructions due to operation of the catalytic filter below the activation temperature are avoided.

Furthermore, as hood opening involves only a portion of the hood (i.e. the movable part), a reduction of gas dispersion into surrounding ambient during hood openings is achieved.

In addition, the provision of a hood made of a fixed part and a movable part makes the opening/closing operation safer (a lower mass is involved in case of accidental downfall of the hood) and easier (a limited portion of the hood, and not the hood in its entirety, takes part in the opening/closing operation). Moreover, the positioning of the catalytic filter assembly into the fixed part of the hood further facilitate the opening/closing operation, if it is considered that the catalytic filter can be quite heavy to be raised by a user.

What is more, the positioning of the catalytic filter assembly into the fixed part of the hood avoids the catalytic filter assembly to undergo stresses any time the hood is opened/closed. This advantageously enables to guarantee a longer life time of the catalytic filter assembly. In addition, it advantageously enables to use a ceramic catalyst structure, which is typically less expensive but more fragile with respect to a metallic catalyst structure.

The provision of a hood made of a fixed part and a movable part also advantageously enables to facilitate hood opening when the barbecue appliance is positioned against a wall.

Accordingly, in a first aspect the present invention relates to a barbecue appliance comprising a lower housing; a cooking surface located in the lower housing; a hood positionable over the lower housing; and a catalytic filter assembly, characterized in that the hood comprises a fixed part and a movable part, the movable part being configured to be moved between a close position and an open position and the catalytic filter assembly being positioned in the fixed part of the hood.

In the present description and claims, the terms "back", "front", "frontal", "top", "bottom", "transversal", "longitudinal", "extracted", "retracted" are used with reference to the barbecue appliance, when the movable part of the hood is in a close position. In particular, the term "transversal" is referred to a direction which extends from one side to the opposite side of the barbecue appliance and is perpendicular both to a longitudinal direction extending from the top to the bottom of the barbecue appliance and to a direction extending from the front to the back of the barbecue appliance.

Preferably, the fixed part of the hood covers at least 30% of the cooking surface area. Preferably, the fixed part covers less than 60% of the cooking surface area. These percentages advantageously enable achieving a good compromise between limiting the area of the cooking cavity affected by temperature drops at the hood openings and guaranteeing a wide working area for the user that needs to inspect and manipulate the food and to clean the cooking cavity.

Preferably, the fixed part is positioned on the back of the hood, the movable part being positioned in the front.

In a preferred embodiment, the fixed part of the hood has a height along a longitudinal direction which is higher than the height of the movable part. In this way, the portion of the cooking cavity which is defined by the fixed part is oblong and a buoyancy effect for the gas to be exhausted is advantageously improved.

The catalytic filter assembly could be positioned on the back of the fixed part of the hood. Preferably, the catalytic filter assembly is positioned on the top of the fixed part of the hood.

In a preferred embodiment, the catalytic filter assembly is operatively coupled to a heater, preferably electric heater. It is noted that, as the catalytic filter assembly with the electric heater is positioned in the fixed part of the hood, electrical connections to the heater are facilitated with respect to a solution wherein the electric heater is positioned to a hood which is movable in its entirety.

The catalytic filter assembly suitably comprises a catalytic filter to filter exhaust gas by catalytic conversion before venting into the surrounding ambient. The catalytic filter may comprise a supporting porous surface treated with a suitable catalyst material. The supporting porous surface can be metallic or ceramic.

In a preferred embodiment, the catalytic filter assembly comprises a mechanical filter positioned upstream of the catalytic filter, with respect to the exhausting direction of the exhaust gas, configured to filter particulates present in the exhaust gas before entrance into the catalytic filter.

The mechanical filter could have a labyrinth shape.

In a preferred embodiment, the catalytic filter assembly comprises a perforated plate positioned upstream of the catalytic filter, with respect to the exhausting direction of exhaust gas, configured to regulates the flow of the exhaust gas entering into the catalytic filter.

Preferably, the movable part of the hood is hingedly connected to the fixed part of the hood.

In a preferred embodiment, the cooking surface is coupled to the lower housing so as to be extracted from and retracted into the lower housing during operation of the barbecue appliance. This embodiment is particularly advantageous when food items of small-medium size (in particular, food items of low-medium height) have to be cooked in the barbecue appliance because it enables the user to inspect the food items, and optionally manipulate them, by simply extracting the cooking surface, without opening the movable part of the hood (the movable part being instead opened when food items of bigger size, such as a turkey, have to be handled by the user). In this way, when food items of small-medium size are cooked, the temperature within the cooking cavity is kept more stable thereby further improving the conversion efficiency of the catalytic filter assembly. Moreover, the user is relieved from raising the movable part of the hood (which may be quite heavy).

Preferably, the cooking surface is slidably coupled to the lower housing.

Preferably, the cooking surface is slidably coupled to the lower housing so as to slide in a trasversal plane of the barbecue appliance.

Preferably, the movable part of the hood has a frontal transversal slot having a predetermined height, configured to pass food items placed into the cooking surface through the slot when the movable part is in the close position and the cooking surface is extracted from the lower housing.

Preferably, the cooking surface is associated with a cover configured to close said frontal transversal slot when the cooking surface is retracted into the lower housing.

Preferably, the barbecue appliance further comprises a collecting plate configured to collect, when the cooking surface is extracted from the lower housing, any food particle (such as grease, fats, oils) dripping downward from food items placed into the cooking surface.

The provision of the collecting plate advantageously enables to avoid to dirty the floor/ground when the cooking surface is extracted for food inspection/manipulation.

Preferably, the collecting plate is extractable from the lower housing.

In a preferred embodiment, the collecting plate comprises a plurality of transversal strips slidably coupled to each other so as to be retracted in a retracted position towards the lower housing and extended in an extracted position away from the lower housing. For example, the transversal strips can be slidably coupled in a telescopic way or can be slidably coupled to each other so as to be superimposed in a retracted position towards the lower housing and extended in an extracted position away from the lower housing.

Preferably, the collecting plate is extractable/retractable in a trasversal plane of the barbecue appliance.

The barbecue appliance suitably comprises control buttons. When the cooking surface is extractable/retractable from/into the lower housing, the control buttons may be preferably positioned on a side surface of the barbecue appliance.

Preferably, the barbecue appliance comprises a gas exhaust system. Preferably, the gas exhaust system is positioned in the fixed part of the hood. Preferably, the gas exhaust system is in fluid connection with the catalytic filter assembly.

The gas exhaust system may be located on the top or on the back of the fixed part of the hood. The top position is preferred because the exhaust gas is easily discharged by buoyancy effect. In case of back position, suitable venting means may be preferably used in order to facilitate gas discharge.

The gas exhaust system could comprise exhaust apertures defined in the fixed part of the hood.

Preferably, the barbecue appliance also comprises at least one heating element configured to be operated to provide heat for cooking food placed onto the cooking surface.

The at least one heating element could be configured to generate heat from a solid fuel, a gas fuel or electric current source.

Preferably, the barbecue appliance comprises at least one additional heating element configured to generate electromagnetic radiation in the microwave spectrum and feed said electromagnetic radiation into the cooking cavity.

The Applicant notes that even if the extractable cooking surface has been described with reference to a barbecue appliance with a catalytic filter assembly and a hood with a fixed part and a movable part, the extractable cooking surface can be advantageously used in any barbecue appliance (e.g. having the hood made of a single movable piece and/or without catalytic filter assembly) in order to allow the user to inspect/manipulate food items of small-medium size by simply extracting the cooking surface and keeping the hood closed. In this way, when food items of small-medium size are cooked, the user is relieved from raising the hood (which may me quite heavy) and the temperature within the cooking cavity is kept more stable. In the presence of a catalytic filter assembly, a more stable temperature within the cooking cavity advantageously enables to improve the performances of the catalytic filter assembly.

In a further aspect the present invention thus relates to a barbecue appliance comprising a lower housing; a cooking surface located in the lower housing; a hood positionable over the lower housing, wherein the cooking surface is coupled to the lower housing so as to be extracted from and retracted into the lower housing during operation of the barbecue appliance.

As far as further preferred features of the barbecue appliance and the cooking surface are concerned reference is made to what already described above with reference to the first aspect of the invention.

Features and advantages of the present invention will be more readily understood from the following detailed description of some preferred embodiments thereof, which is given below by way of non-limiting example with reference to the accompanying drawings, in which:
- figure 1 schematically shows a side view of a barbecue appliance according to an embodiment of the invention, wherein the movable part of the hood is in a close position and the catalytic filter assembly is positioned on the top of the fixed part of the hood;
- figure 2 schematically shows the side view of the barbecue appliance of figure 1, wherein the movable part of the hood is in an open position;
- figure 3 schematically shows the side view of the barbecue appliance according to another embodiment of the invention, wherein the catalytic filter assembly is positioned on the back of the fixed part of the hood;
- figure 4 schematically shows a cross-section view of an exemplary embodiment of a catalytic filter assembly for use in a barbecue appliance according to the invention;
- figure 5 schematically shows a side view of a barbecue appliance according to another embodiment of the invention, having an extractable cooking surface and an associated collecting plate, wherein the movable part of the hood is in a close position, the catalytic filter assembly is positioned on the top of the fixed part of the hood and the cooking surface with the collecting plate are in a retracted position;
- figure 6 schematically shows the side view of the barbecue appliance of figure 5, wherein the movable part of the hood is in an open position and the cooking surface with the collecting plate are in an extracted position;
- figure 7 schematically shows a perspective view of a barbecue appliance of the type shown in figure 5 with a supporting stand, partially shown;
- figure 8 schematically shows the perspective view of the barbecue appliance of figure 7 wherein the movable part of the hood is in an open position;
- figure 9 schematically shows the perspective view of the barbecue appliance of figure 7 wherein the movable part of the hood is in an open position and the cooking surface with the collecting plate are in an extracted position.

In the following description, like elements are denoted by like reference signs throughout the figures.

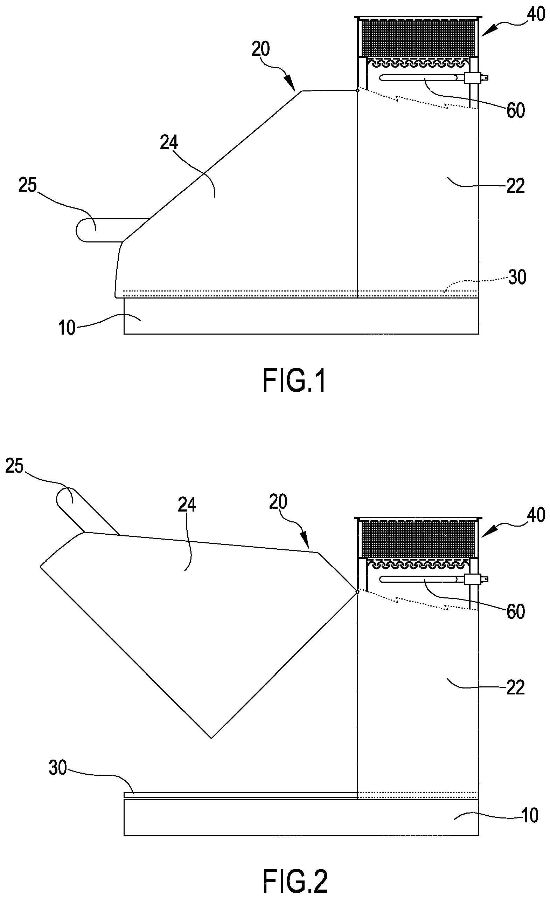

Figures 1-3 show a barbecue appliance 1 according to an embodiment of the invention.

The barbecue appliance 1 comprises a lower housing 10, a hood 20, a cooking surface 30 and a catalytic filter assembly 40.

The lower housing 10 is configured to provide a support for the cooking surface 30. The cooking surface 30 preferably comprises a metal grid that, for example, may have a corrugated top surface with peaks and valleys or may be made of parallel or crossed metal (e.g. iron) bars.

The barbecue appliance 1 is preferably configured to house at least one heating element (not illustrated) configured to generate heat from a heating source (not illustrated), for the purpose of cooking food placed onto the cooking surface 30. The heating elements are preferably located under the cooking surface 30.

The heating source can be for example a solid fuel (e.g. coal), a gas fuel and/or an electric current heating source.

For example, in case of gas fuel, the gas fuel heating source can be a gas cylinder (not illustrated) adapted to provide gas (e.g. propane or butane) to a plurality of gas burners (not illustrated) defining the heating elements. In case of solid fuel heating source, the heating element can comprise a support (e.g. a grate or a tray) for charcoal. In case of electric current heating source, the heating element can comprise electric heaters.

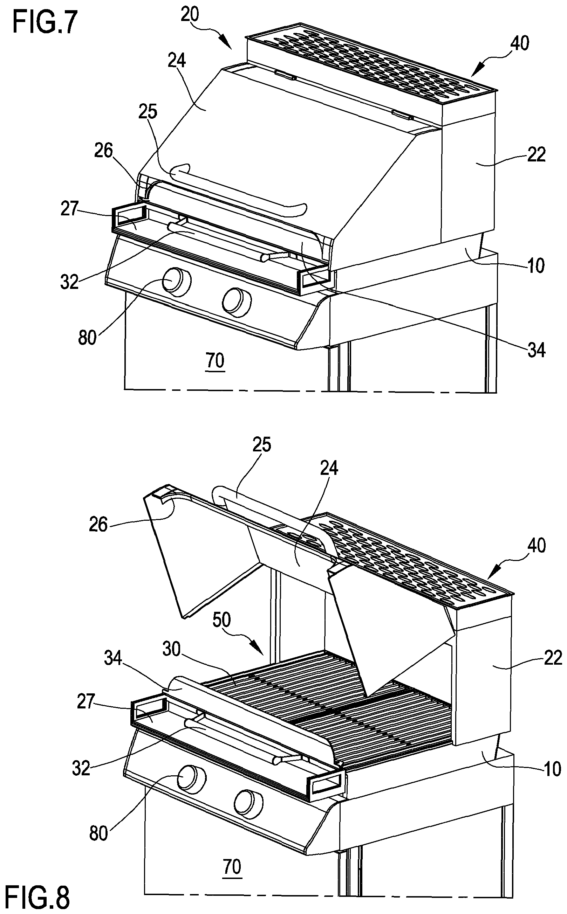

The lower housing 10 may be supported by a stand (illustrated in part, with reference number 70, in relation to the embodiment of figures 7-9). For example, the stand can be a cabinet configured to house the gas fuel source (e.g., the gas cylinder).

The barbecue appliance 1 can suitably comprise control buttons (illustrated, with reference number 80, in relation to the embodiment of figures 7-9).

According to an embodiment (not illustrated) the cooking process of the barbecue appliance 1 can be speeded up and the quality thereof can be improved by combing the heat generated by the above mentioned heating elements with heat generated by additional heating elements configured to generate electromagnetic radiation in the microwave spectrum and feed said electromagnetic radiation into food placed onto cooking surface 30.

The hood 20 is positioned over the lower housing 10 to define a cooking cavity 50.

The hood 20 enables to accelerate the cooking process, to improve gas circulation within the cooking cavity 50 and to control gas discharge into surrounding ambient.

According to the invention, the hood 20 comprises a fixed part 22 and a movable part 24. The fixed part 22 defines the back of the hood 20 while the movable part 24 defines the front of the hood 20.

The fixed part 22 is connected to the lower housing 10. The movable part 24 is connected to the fixed part 22 so as to be moved between an open and a close position. For example, the movable part 24 is hinged to the fixed part 22. The movable part 24 preferably has a handle 25 for facilitating the opening/closing operations.

The movable part 24 can be moved by a user into the open position in order to allow him/her to place/remove the food onto/from the cooking surface 30, to inspect and/or handle (e.g. turning) the food being cooked, and to clean the cooking surface 30. The movable part 24 in the close position traps the heated gas generated during food cooking within the cooking cavity 50, thereby improving the cooking efficiency, and limiting and controlling gas and odour dispersion in surrounding ambient.

Preferably, the catalytic filter assembly 40 is fluidly connected to gas exhaust apertures (not illustrated) defined in the fixed part 22 of the hood 20, configured to discharge gas (combustion smoke and food cooking smoke/odours) suitably filtered by the catalytic filter assembly 40. Preferably, the catalytic filter assembly 40 is positioned upstream of the gas exhaust apertures, with respect to the exhausting direction of exhaust gas.

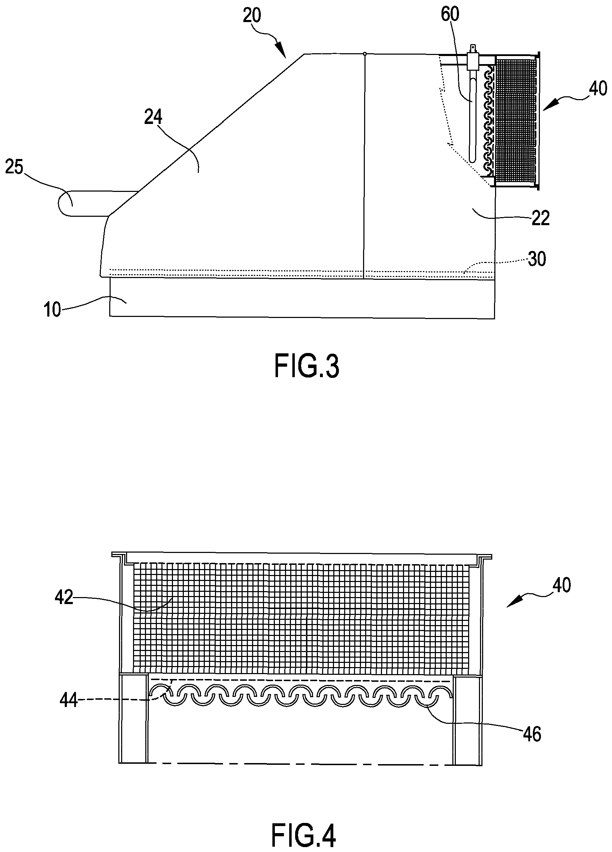

The catalytic filter assembly 40 and the gas exhaust apertures may be located on the top (see embodiment of figures 1-2) or on the back (see embodiment of figure 3) of the fixed part of the hood 20.

The top position is preferred because the exhaust gas discharge is improved by buoyancy effect. In order to increase the buoyancy effect, the fixed part 22 may preferably have a height that is higher than the height of the movable part 24, as schematically shown in figures 1-2. The buoyancy effect is sustained by the exhaust gas temperature and the top position of the catalytic filter assembly 40, over the cooking surface 30.

In case of back position, suitable venting means (not illustrated) may be preferably used in order to facilitate gas discharge through the catalytic filter assembly 40 and the gas exhaust apertures.

According to an embodiment shown in figure 4, the catalytic filter assembly 40 may preferably comprise a catalytic filter 42, a perforated plate 44 and a mechanical filter 46.

The catalytic filter 42 is configured to catalytically oxidize grease, fats, volatile organic compound (VOC), oils and/or other hydrocarbons in the combustion smoke and food cooking smoke/odours, by flameless burning and conversion into H₂O and CO₂.

The catalytic filter 42 can comprise a supporting porous surface treated with a suitable catalyst active material. The supporting surface can, for example, be metallic or ceramic.

The catalyst active material could be platinum, possibly combined with palladium. The supporting surface could comprise waved metal strips or ceramic (e.g. alumina) porous bricks, preferably with a regular geometry (e.g. honeycomb ceramic surface).

The catalytic filter 42 is preferably positioned in the fixed part 22 of the hood 20 so that the supporting porous surface is substantially perpendicular to the exhaust gas flow. In particular, the catalytic filter 42 is arranged horizontally in the embodiment of figure 1, where the exhaust gas flow direction is vertical, and vertically in the embodiment of figure 3, where the exhaust gas flow direction is horizontal.

The geometry and structure of catalytic filter 42 (e.g., porosity, height and size of the supporting porous surface, composition and amount of catalyst material) are preferably chosen so as to guarantee a predetermined catalytic conversion efficiency depending upon different parameters of the barbecue appliance 1 such as, for example, buoyancy effect obtainable by the configuration of the barbecue appliance, cooking surface size, nominal cooking capacity (mass of food applied versus square meters of cooking surface), power supply, VOC and particulate concentration and type, average cooking temperature, and so on.

The catalyst filtration efficiency can be, for example, expressed by VOC conversion rate, which is the ratio of transformation of volatile organic compounds VOC (and hydrocarbons HC) to CO₂, H₂O, HCl and Cl₂ by thermo-catalytic reaction within the catalytic structure governed by reaction kinetics and reaction equilibrium. The VOC conversion rate is preferably higher than 50% and could reach 80%. Beside the VOC, the exhaust gas may contain particulates. Their amount can be 2-3 times higher than VOC, usually in stabile proportion. Leading indicator for particulate abatement rate can thus be the VOC conversion rate.

The mechanical filter 46 is positioned upstream of the catalytic filter 42, with respect to the direction of the exhaust gas flow. The mechanical filter 46 is configured to filter, preferably in an amount of at least 90%, the particulates present in the exhaust gas. This advantageously enables to guarantee that the exhaust gas passing through the catalytic filter 42 is as much as possible free from particulates that may impair its operation.

For example, the mechanical filter 46 can have a labyrinth shape.

The perforated plate 44 is positioned between the catalytic filter 42 and the mechanical filter 46. The perforated plate 44 has holes configured (e.g., in size and number) so as to adjust the flow of the exhaust gas passing through the catalytic filter 42. Like the catalytic filter 42, the perforated plate 44 is arranged horizontally in the embodiment of figure 1 and vertically in the embodiment of figure 3.

As already observed above, catalytic conversion in the catalytic filter 42 takes place above a predetermined activation temperature of the catalyst material. Moreover, catalytic conversion efficiency is sensible to temperature variations.

In the barbecue appliance 1 according to the invention, sudden temperature drops within the cooking cavity 50 at each hood opening are mitigated thanks to the fact that only a limited portion of the hood 20 (the movable part 24) is involved in the opening operations, and the catalytic filter assembly 40 is positioned in the fixed part 22. This enables to maintain the temperature of the hot exhaust gas passing through the catalytic filter 42 more stable, notwithstanding hood openings.

Thanks to the invention, the heat provided by the hot exhaust gas passing through the catalytic filter 42 can be sufficient to provide and maintain the temperature required to support a catalytic reaction in the catalytic filter 42. A heater to heat the catalytic filter 42 at a temperature sufficient to support a catalytic reaction is not required.

However, as shown in the embodiments shown in figures 1-3, the catalytic filter assembly 40 could be operatively coupled to a heater 60, preferably an electric heater.

The presence of heater 60 can be advantageous in order to ensure an effective operation of the catalytic filter 42 even with reduced exhaust gas flow/temperature and/or with variations of external/surrounding ambient temperature.

Heater 60 is preferably configured so as to guarantee that the whole volume of the catalytic filter 42 is well and uniformly heated in order to avoid condensation effects of the VOC and converted fractions within the structure of catalytic filter 42. The heater 60 helps to maintain a more stable temperature of exhaust gas in the catalytic filter 42.

Suitably, the barbecue appliance also comprises an air inlet system (not illustrated). The air inlet system may comprise air inlet aperture(s) that can be defined in a bottom region of the lower housing 10, so as to enable fresh air for gas combustion to enter into the cooking cavity 50.

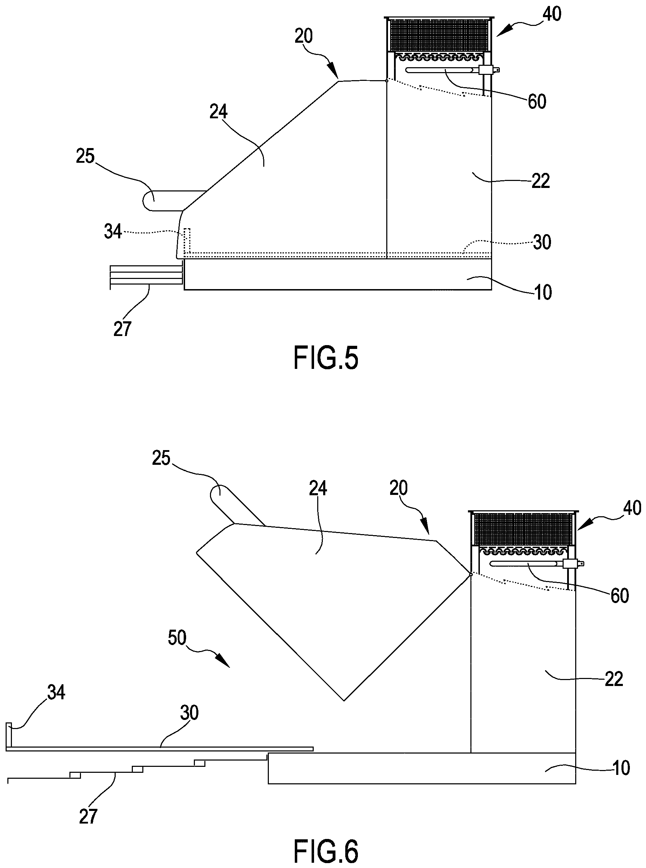

Figures 5-9 show a preferred embodiment of the barbecue appliance 1 wherein the cooking surface 30 is coupled to the lower housing 10 so as to be extracted from and retracted into the lower housing 10 during food cooking, whereby food items being cooked can be inspected and, optionally, manipulated by simply extracting the cooking surface 30 (without opening the movable part 24 of the hood 20).

For facilitating cooking surface extraction/retraction, cooking surface 30 is preferably provided with a handle 32 (illustrated in figures 7-9).

Preferably, the cooking surface 30 is slidably coupled to the lower housing 10 so as to slide in a trasversal plane of the barbecue appliance 1, which is substantially perpendicular with respect to a longitudinal direction of the barbecue appliance 1.

In this embodiment, the movable part 24 of the hood 20 preferably has a frontal transversal slot 26 (illustrated in figures 7-9) having a predetermined height (e.g. 4-8 cm), configured to pass the food placed into the cooking surface 30 through the slot 26 when the movable part 24 is in the close position and the cooking surface 30 is extracted from the lower housing 10. The height is suitably sized in order to pass small-medium size food items (e.g., sausages, steaks, and similar).

The cooking surface 30 preferably has a front wall or cover 34 configured to close said frontal transversal slot 26 when the movable part 24 is in the close position and the cooking surface 30 is retracted into the lower housing 10, as illustrated in figure 7.

Preferably, when the cooking surface 30 is in the retracted position the cover 34 and the frontal transversal slot 26 substantially lie in a same vertical plane defining a frontal plane of the movable part 24 of the hood 20.

Preferably, the shape of the cover 34 substantially matches the shape of the frontal transversal slot 26.

The barbecue appliance 1 preferably further comprises a collecting plate 27 configured to collect, below the cooking surface 30, any food particle (such as grease, fats, oils) dripping downwards from the food being cooked when the cooking surface 30 is in the extracted position. This advantageously enables to avoid dirtying the floor/ground when the cooking surface 30 is extracted for food inspection, manipulation and/or cleaning.

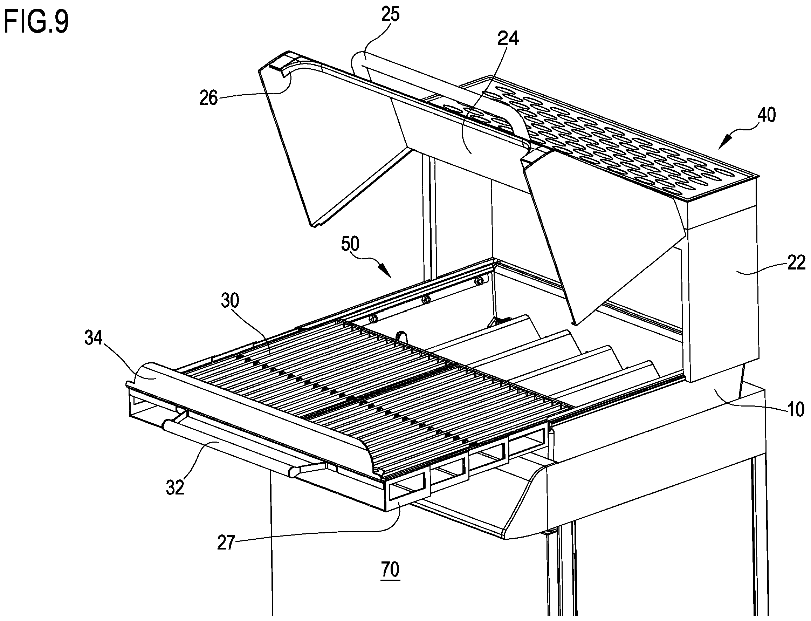

The collecting plate 27 is preferably coupled to the lower housing 30 so as to be extracted away from and retracted towards the lower housing 10, below the cooking surface 30. The collecting plate 27 is preferably configured to be extracted/retracted in a horizontal direction. In a variant shown in figures 5-6, the collecting plate 27 comprises a plurality of transversal strips slidably coupled to each other so as to be superimposed in a retracted position towards the lower housing 10 (figure 5) and extended in an extracted position away from the lower housing 10 (figure 6). In a variant shown in figures 7-9, the collecting plate 27 has a telescopic-type configuration. In particular, the collecting plate 27 comprises a plurality of transversal strips slidably coupled to each other in a telescopic way so as to be retracted in a retracted position towards the lower housing 10 (figures 7, 8) and extended in an extracted position away from the lower housing 10 (figure 9). In the variant of figures 7-9, the ends of the transversal strips can be provided with handles to be used by a user to open and close the collecting plate 27 in the extracted position and retracted position, respectively.

The embodiment of the barbecue appliance 1 of figures 5-9 with the extractable cooking surface 30 is particularly advantageous when food items of small-medium size (in particular, food items of low-medium height) have to be cooked in the barbecue appliance 1. In fact, it enables the user to inspect the food items and optionally to turn them, by simply extracting the cooking surface 30, without opening the movable part 24 of the hood 20. In this way, when food items of small-medium size are cooked, the temperature within the cooking cavity 50 is kept more stable and correct operation of the catalytic filter assembly 20 is guaranteed.

Moreover, this embodiment is advantageous because it relieves the user from raising the movable part 24 of the hood (which may me quite heavy). Food cooking management is more handy and fast. The user is enabled to manage food items by both hands. Moreover, by eliminating the need of hood opening, the barbecue appliance 1 is made safer because the risk of accidental downfall of the hood onto user hands during food management is avoided.

However, in this embodiment, the movable part 24 of the hood 20 can still be opened/closed when food items of bigger size, such as a turkey, have to be cooked.

As illustrated in figures 7-9, the lower housing 10 can be suitably supported by a stand 70 (illustrated only in part). For example, the stand 70 can be a cabinet configured to house the gas fuel source.

As illustrated in figures 7-9, the barbecue appliance 1 preferably comprises control buttons 80.

As far as further structural and functional features of the barbecue appliance 1 according to the embodiment of figures 5-9, reference is made to what already described above with reference to figures 1-4. In particular, it is noted that even if figures 5-9 show the barbecue appliance 1 with extractable cooking surface 30 wherein the catalytic filter assembly 40 is positioned at the top of the fixed part 22 of the hood 20, the extractable cooking surface 30 can also be used in a barbecue appliance wherein the catalytic filter assembly 40 is positioned at the back of the fixed part 22 of the hood 20 (as in the embodiment of figure 3).

## Claims

1. Barbecue appliance (1) comprising a lower housing (10), a cooking surface (30) located in the lower housing (10), a hood (20) positionable over the lower housing (10) to define a cooking cavity (50), and a catalytic filter assembly (40), wherein the hood (20) comprises a fixed part (22) and a movable part (24), the movable part (24) being configured to be opened and closed during operation of the barbecue appliance (1) and the catalytic filter assembly (40) being positioned in the fixed part (22) of the hood, **characterized in that** only the movable part (24) takes part in opening/closing operations of the hood (20).

2. Barbecue appliance (1) according to claim 1, wherein the fixed part (22) is positioned on the back of the hood (20), the movable part (24) being positioned in the front.

3. Barbecue appliance (1) according to claim 1 or 2, wherein the fixed part (22) of the hood (20) has a height (1) that is higher than the height of the movable part (24) when the movable part (24) is closed.

4. Barbecue appliance (1) according to any of claims 1 to 3, wherein the catalytic filter assembly (40) is positioned on the top of the fixed part (22) of the hood (20).

5. Barbecue appliance (1) according to any of claims 1 to 4, wherein the catalytic filter assembly (40) comprises a catalytic filter (42) configured to filter exhaust gas by catalytic conversion.

6. Barbecue appliance (1) according to claim 5, wherein the catalytic filter assembly (40) further comprises a mechanical filter (46) positioned upstream of the catalytic filter (42), the mechanical filter (46) being configured to filter particulates present in the exhaust gas before entrance into the catalytic filter (42).

7. Barbecue appliance (1) according to claim 5 or 6, wherein the catalytic filter assembly (40) further comprises a perforated plate (44) positioned upstream of the catalytic filter (42) and configured to regulate the flow of the exhaust gas entering into the catalytic filter (42).

8. Barbecue appliance (1) according to any of claims 1 to 7, wherein the movable part (24) of the hood (20) is hingedly connected to the fixed part (22) of the hood (20).

9. Barbecue appliance (1) according to any of claims 1 to 8, wherein the cooking surface (30) is coupled to the lower housing (10) so as to be extracted from and retracted into the lower housing (10) during operation of the barbecue appliance (1).

10. Barbecue appliance (1) according to claim 9, wherein the cooking surface (30) is slidably coupled to the lower housing (10).

11. Barbecue appliance (1) according to claim 9 or 10, wherein the movable part (24) of the hood (20) has a frontal transversal slot (26) having a predetermined height to allow passage of food items placed into the cooking surface (30) when the movable part (24) is in the closed position and the cooking surface (30) is extracted from the lower housing (10).

12. Barbecue appliance (1) according to claim 11, wherein the cooking surface (30) is associated with a cover (34) configured to close said frontal transversal slot (26) when the movable part (24) is in the closed position and the cooking surface (30) is retracted into the lower housing (10).

13. Barbecue appliance (1) according to any of claims 9 to 12, further comprising a collecting plate (27) configured to collect, when the cooking surface (30) is extracted from the lower housing (10), food particles dripping from food items placed into the cooking surface (30).

14. Barbecue appliance (1) according to claim 13, wherein the collecting plate (27) is extractable from the lower housing (10).

15. Barbecue appliance (1) according to claim 14, wherein the collecting plate (27) comprises a plurality of transversal strips slidably coupled to each other so as to be retractable towards the lower housing (10) and extendable away from the lower housing (10).

## Patentansprüche

1. Grillgerät (1), umfassend ein unteres Gehäuse (10), eine Kochoberfläche (30), die in dem unteren Gehäuse (10) angeordnet ist, eine Haube (20), die über dem unteren Gehäuse (10) zum Definieren einer Kochmulde (50) positioniert werden kann, und eine katalytische Filteranordnung (40), wobei die Haube (20) ein festes Teil (22) und ein bewegliches Teil (24) umfasst, wobei das bewegliche Teil (24) zum Öffnen und Schließen während des Betriebs des Grillgeräts (1) konfiguriert ist, und wobei die katalytische Filteranordnung (40) im festen Teil (22) der Haube positioniert ist, **dadurch gekennzeichnet, dass** nur das bewegliche Teil (24) an den Öffnungs-/Schließbetrieben der Haube (20) beteiligt ist.

2. Grillgerät (1) nach Anspruch 1, wobei das feste Teil (22) auf der Rückseite der Haube (20) positioniert ist, wobei das bewegliche Teil (24) auf der Vorderseite positioniert ist.

3. Grillgerät (1) nach Anspruch 1 oder 2, wobei das feste Teil (22) der Haube (20) eine Höhe (1) aufweist, die höher als die Höhe des beweglichen Teils (24) ist, wenn das bewegliche Teil (24) geschlossen ist.

4. Grillgerät (1) nach einem der Ansprüche 1 bis 3, wobei die katalytische Filteranordnung (40) auf der Oberseite des festen Teils (22) der Haube (20) positioniert ist.

5. Grillgerät (1) nach einem der Ansprüche 1 bis 4, wobei die katalytische Filteranordnung (40) einen katalytische Filter (42) aufweist, der konfiguriert ist, um Abgas durch katalytische Umwandlung zu filtern.

6. Grillgerät (1) nach Anspruch 5, wobei die katalytische Filteranordnung (40) ferner einen mechanischen Filter (46) umfasst, der stromaufwärts des katalytischen Filters (42) positioniert ist, wobei der mechanische Filter (46) zum Filtern der im Abgas vorhandenen Teilchen vor Eintritt in den katalytischen Filter (42) konfiguriert ist.

7. Grillgerät (1) nach Anspruch 5 oder 6, wobei die katalytische Filteranordnung (40) ferner eine perforierte Platte (44) umfasst, die stromaufwärts des katalytischen Filters (42) positioniert ist und zum Regeln des Abgasflusses konfiguriert ist, der in den katalytischen Filter (42) eintritt.

8. Grillgerät (1) nach einem der Ansprüche 1 bis 7, wobei das bewegliche Teil (24) der Haube (20) über Scharniere mit dem festen Teil (22) der Haube (20) verbunden ist.

9. Grillgerät (1) nach einem der Ansprüche 1 bis 8, wobei die Kochfläche (30) mit dem unteren Gehäuse (10) derart gekoppelt ist, um während des Betriebs des Grillgeräts (1) aus dem unteren Gehäuse (10) vorgeschoben und zurückgezogen zu werden.

10. Grillgerät (1) nach Anspruch 9, wobei die Kochfläche (30) verschiebbar mit dem unteren Gehäuse (10) gekoppelt ist.

11. Grillgerät (1) nach Anspruch 9 oder 10, wobei das bewegliche Teil (24) der Haube (20) einen vorderen quer verlaufenden Schlitz (26) aufweist, der eine vorbestimmte Höhe aufweist, um den Durchgang von Lebensmittelelementen, die auf der Kochfläche (30) angeordnet sind, zuzulassen, wenn das bewegliche Teil (24) in der geschlossenen Position ist und die Kochfläche (30) aus dem unteren Gehäuse (10) vorgeschoben ist.

12. Grillgerät (1) nach Anspruch 11, wobei die Kochfläche (30) mit einer Abdeckung (34) verknüpft ist, die derart konfiguriert ist, dass sie den vorderen quer verlaufenden Schlitz (26) schließt, wenn sich das bewegliche Teil (24) in der geschlossenen Position befindet und die Kochfläche (30) in das untere Gehäuse (10) zurückgezogen ist.

13. Grillgerät (1) nach einem der Ansprüche 9 bis 12, ferner umfassend eine Sammelplatte (27), die zum Sammeln konfiguriert ist, wenn die Kochfläche (30) aus dem unteren Gehäuse (10) vorgeschoben ist, wobei Lebensmittelteilchen von den Lebensmittelelementen in die Kochfläche (30) abtropfen.

14. Grillgerät (1) nach Anspruch 13, wobei die Sammelplatte (27) aus dem unteren Gehäuse (10) vorgeschoben werden kann.

15. Grillgerät (1) nach Anspruch 14, wobei die Sammelplatte (27) eine Mehrzahl von quer verlaufenden Streifen umfasst, die verschiebbar aneinander gekoppelt sind, um in Richtung des unteren Gehäuses (10) zurückgezogen zu werden und von dem unteren Gehäuse (10) ausziehbar zu sein.

## Revendications

1. Appareil de barbecue (1) comprenant un boîtier inférieur (10), une surface de cuisson (30) située dans le boîtier inférieur (10), un capot (20) pouvant être positionné au-dessus du boîtier inférieur (10) pour définir une cavité de cuisson (50) et un ensemble de filtre catalytique (40), dans lequel le capot (20) comprend une partie fixe (22) et une partie mobile (24), la partie mobile (24) étant configurée de manière à être ouverte et fermée pendant le fonctionnement de l'appareil de barbecue (1), et l'ensemble de filtre catalytique (40) étant positionné dans la partie fixe (22) du capot, **caractérisé en ce que** seule la partie mobile (24) participe aux opération d'ouverture et de fermeture du capot (20).

2. Appareil de barbecue (1) selon la revendication 1, dans lequel la partie fixe (22) est positionnée au dos du capot (20), la partie mobile (24) étant positionné sur la partie avant.

3. Appareil de barbecue (1) selon la revendication 1 ou 2, dans lequel la partie fixe (22) du capot (20) présente une hauteur (1) qui est supérieure à la hauteur de la partie mobile (24) lorsque la partie mobile (24) est fermée.

4. Appareil de barbecue (1) selon l'une quelconque des revendications 1 à 3, dans lequel l'ensemble de filtre catalytique (40) est positionné au sommet de la partie fixe (22) du capot (20).

5. Appareil de barbecue (1) selon l'une quelconque des revendications 1 à 4, dans lequel l'ensemble de filtre catalytique (40) comprend un filtre catalytique (42) configuré de manière à filtrer le gaz d'échappement par conversion catalytique.

6. Appareil de barbecue (1) selon la revendication 5, dans lequel l'ensemble de filtre catalytique (40) comprend en outre un filtre mécanique (46) qui est positionné en amont du filtre catalytique (42), le filtre mécanique (46) étant configuré de manière à filtrer les particules présentes dans le gaz d'échappement avant l'entrée dans le filtre catalytique (42).

7. Appareil de barbecue (1) selon la revendication 5 ou 6, dans lequel l'ensemble de filtre catalytique (40) comprend en outre une plaque perforée (44) qui est positionnée en amont du filtre catalytique (42) et qui est configurée de manière à réguler l'écoulement du gaz d'échappement qui entre dans le filtre catalytique (42).

8. Appareil de barbecue (1) selon l'une quelconque des revendications 1 à 7, dans lequel la partie mobile (24) du capot (20) est connectée de façon articulée à la partie fixe (22) du capot (20).

9. Appareil de barbecue (1) selon l'une quelconque des revendications 1 à 8, dans lequel la surface de cuisson (30) est couplée au boîtier inférieur (10) de manière à être extraite du et rétractée dans le boîtier inférieur (10) pendant le fonctionnement de l'appareil de barbecue (1).

10. Appareil de barbecue (1) selon la revendication 9, dans lequel la surface de cuisson (30) est couplée de façon coulissante au boîtier inférieur (10).

11. Appareil de barbecue (1) selon la revendication 9 ou 10, dans lequel la partie mobile (24) du capot (20) comporte une fente transversale frontale (26) qui présente une hauteur prédéterminée et qui est destinée à permettre le passage de produits alimentaires placés dans la surface de cuisson (30) lorsque la partie mobile (24) se trouve dans la position fermée et que la surface de cuisson (30) est extraite du boîtier inférieur (10).

12. Appareil de barbecue (1) selon la revendication 11, dans lequel la surface de cuisson (30) est associée à un couvercle (34) configuré de manière à fermer ladite fente transversale frontale (26) lorsque la partie mobile (24) se trouve dans la position fermée et que la surface de cuisson (30) est rétractée dans le boîtier inférieur (10).

13. Appareil de barbecue (1) selon l'une quelconque des revendications 9 à 12, comprenant en outre une plaque de collecte (27) configurée de manière à collecter, lorsque la surface de cuisson (30) est extraite du boîtier inférieur (10), des particules d'aliments qui tombent à partir de produits alimentaires placés dans la surface de cuisson (30).

14. Appareil de barbecue (1) selon la revendication 13, dans lequel la plaque de collecte (27) peut être extraite du boîtier inférieur (10).

15. Appareil de barbecue (1) selon la revendication 14, dans lequel la plaque de collecte (27) comprend une pluralité de bandes transversales couplées de façon coulissante les unes aux autres de manière à être rétractables en direction du boîtier inférieur (10) et extensibles à l'écart du boîtier inférieur (10).
